# EUROPEAN PATENT APPLICATION

(11) **EP 4 197 373 A1**
(43) Date of publication of application: **21.06.2023**
(21) Application number: 21215006.4
(22) Date of filing: 16.12.2021
(51) Int. Cl.: A24F 40/57, A24F 40/50

(54) **SMOKING SUBSTITUTE SYSTEM**

(71) Applicant: IMPERIAL TOBACCO LIMITED, Bristol BS3 2LL (GB)
(72) Inventor: The designation of the inventor has not yet been filed
(74) Representative: Mewburn Ellis LLP

(57) **Abstract**

There is provided a heat-not-burn device having a thermostatic heater control wherein a puff is determined to have occurred by monitoring when a heater activation period exceeds a threshold.

Advantageously, it has been found that determining a puff from monitoring the heater activation period against a threshold is able to detect weaker puffs that a flow sensor may miss. For instance, flow sensors may be capable of detecting puffs with an average flow rate of 55ml / per second, but fail to detect weaker puffs having an average flow rate which is half or a third of that rate. Whereas it has been found that determining a puff based on the heater activation period can provide a more reliable indication of puff detection, particularly for weak puffs. An accurate and reliable puff detection is advantageous for a number of functions. In particular, an accurate and reliable puff detection allows a puff count to be determined during each smoking session. By way of example, the puff count can be used to identify if the smoking session can be extended based on whether a number of puffs has not been exceeded.

## Description

### TECHNICAL FIELD

The present invention relates to a smoking substitute system and particularly, although not exclusively, to a smoking substitute system comprising a device

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful by-products. There have been proposed various smoking substitute systems (or "substitute smoking systems") in order to avoid the smoking of tobacco.

Such smoking substitute systems can form part of nicotine replacement therapies aimed at people who wish to stop smoking and overcome a dependence on nicotine.

Smoking substitute systems include electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and with combustible tobacco products. Some smoking substitute systems use smoking substitute articles (also referred to as a "consumable") that are designed to resemble a traditional cigarette and are cylindrical in form with a mouthpiece at one end.

The popularity and use of smoking substitute systems has grown rapidly in the past few years. These systems assist habitual smokers wishing to quit tobacco smoking.

There are a number of different categories of smoking substitute systems, each utilising a different smoking substitute approach.

One approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

Atypical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

The present disclosure has been devised in the light of the above considerations.

### SUMMARY OF THE INVENTION

At their most general, aspects of the present invention relate to a heat-not-burn device having a thermostatic heater control wherein a puff is determined to have occurred by monitoring when a heater activation period exceeds a threshold. Advantageously, it has been found that determining a puff from monitoring the heater activation period against a threshold is able to detect weaker puffs that a flow sensor may miss. For instance, flow sensors may be capable of detecting puffs with an average flow rate of 55ml / per second, but fail to detect weaker puffs having an average flow rate which is half or a third of that rate. Whereas it has been found that determining a puff based on the heater activation period can provide a more reliable indication of puff detection, particularly for weak puffs. An accurate and reliable puff detection is advantageous for a number of functions. In particular, an accurate and reliable puff detection allows a puff count to be determined during each smoking session. By way of example, the puff count can be used to identify if the smoking session can be extended based on whether a number of puffs has not been exceeded.

A thermostatic heater control is configured to turn on and off a heater element to maintain the heater element at a required operating temperature. For instance, the required operating temperature may be a band. The band is suitably determined to be suitable for aerosolising a aerosol-generating substrate. When the temperature of the heater is detected to rise above an upper limit of the band, the thermostatic heater control turns off the heater. That is, the thermostatic heater control prevents power being supplied to the heater element. When the heater element is off, the heater element temperature cools. When it is detected that the heater element temperature drops below a lower limit of the band, the thermostatic heater control is configured to turn on the heater. That is, the thermostatic heater control provides power to the heater element. When the heater element is on, the heater element heats up and the cycle is repeated. The time period between the heater being turned off and back on again (i.e. the time period between the temperature dropping from the upper limit and the lower limit) is termed the heater deactivation period. The time period between the heater being turned on and back off again (i.e. the time period between the temperature raising from the lower limit and the upper limit) is termed the heater activation period. A heater activation period and a subsequent heater deactivation period is termed a single thermostatic cycle. Typically, there may be a number of thermostatic cycles every second to maintain the heater temperature at the operating temperature (i.e. the temperature required to generate an aerosol from the aerosol forming substrate).

In general, a smoking session is started by inserting a consumable into a device and the device activated. For instance, a start button may be activated. Once started, the thermostatic heater control is configured to activate the heater element to bring the heater element up to operating temperature. That is, the thermostatic heater control is configured to provide power to the heater element. Once the heater element reaches temperature, the thermostatic heater control completes thermostatic cycles to maintain the heater element temperature within the operating temperature band until the end of the smoking session. At the end of the smoking session (typically based on a predetermined total smoking session time) the thermostatic heater control deactivates the heater element, and the heater element cools. The user is informed at the start of the session once the heater has reached operating temperature and at the end of the session. Between these periods, the user inhales on the system to draw air through the consumable and to breathe in the aerosol generated by the heater element heating the consumable. Each inhale is termed a puff. The user can complete puffs according to their preference. It is preferable that if a user has not completed a minimum number of puffs in a smoking session, that the device be configurable to extend the time of the smoking session. Consequently, being able to accurately and repeatedly determine the number of puffs is advantageous for determining when a session is to be extended. However, there are other useful functions that can be or might be incorporated into an aerosol generating apparatus, which rely on determining a puff and / or counting the number of puffs.

According to the exemplary embodiments, a puff is determined to have occurred by monitoring the activation period of the thermostatic cycles during a session. That is, once the heater has warmed up and the session has started, the thermostatic heater control is configured to complete a plurality of thermostatic cycles (i.e. a number of thermostatic cycles each second). It has been found that without external influence

(i.e. when a user does not initiate a puff) the heater activation periods of successive thermostatic cycles is relatively stable. That is, the heater element temperature is naturally regulated and the heater activation periods are relatively steady. When a puff occurs, the forced cooling of the heater element due to the drawing through the system of air flow, causes that heater activation period after the puff is initiated to be extended. That is, the thermostatic controller controls the heater element to be activated for longer before the temperature of the heater element raises above the upper limit of the operating temperature band causing the thermostatic heater control to turn off the heater element. Suitably, by monitoring the activation period of each thermostatic cycle, a puff can be determined by identifying heater activation periods that exceed a threshold. Here, the threshold many be a predetermined threshold, or the threshold may be based on an average of a number of previous activation periods, for instance an activation period rolling average.

As described above, it will be appreciated an "aerosol generating apparatus" (or "electronic(e)-cigarette") may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis). An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated, and may for example include or take the form of an actuator (e.g. actuation button) and/or an airflow sensor. In exemplary embodiments the aerosol generating apparatus (smoking substitute apparatus) comprises an aerosol generating device (smoking substitute device) and a consumable (aerosol-forming article).

In other words, the exemplary embodiments provide an aerosol generating device comprising a heater element, a temperature sensor, and a control system including a thermostatic heater control. The control system is configured to start a smoking session by operating the thermostatic heater control to activate the heater element. The thermostatic heater control is configured to activate and deactivate the heater element in thermostatic cycles to maintain the heater element temperature between an operating temperature band based on an output of the temperature sensor. The control system is configured to monitor the activation period of each thermostatic cycle and to determine a puff has been initiated based on determining when an activation period exceeds a threshold.

Optional features will now be set out. These are applicable singly or in any combination with any aspect.

In the exemplary embodiments, the heater element is suitably a heater rod, but other heater elements are envisaged such as blades, coils or electromagnetic induction systems operated by thermostatic control (i.e. on/off modulation to maintain the operating temperature).

In the exemplary embodiments, the temperature sensor monitors the temperature of the heating element. For instance, the temperature sensor may be directly fixed to the heating element. In some embodiments, the temperature sensor may be resistive tracks formed on the heating element and from which the temperature can be deduced due to changes in resistance. The output of the temperature sensor is used by the thermostatic heater control to determine when the temperature of the heart element is above ort below the operating temperature band.

In the exemplary embodiments, the thermostatic heater control and the control system may be the same or separate units. Moreover, the control system may include controllers and memory as necessary to complete one or more functions of the device. Here, the functions may include further functions of the device, as is known in the art. In particular, the control system may comprise a count function to count the number of determined puffs. Here, the count function may be reset at the end of a smoking session. But it is envisaged there may be functions of the device where puff count over different periods would be useful. Suitably, the control system may use the counted number of puffs. For instance, the control system may determine whether to extend a smoking session period based on the counted number of puffs. The control system may additionally or alternatively use the counted number of puffs, or the puff detection to control other functions of the device, or to transmit the information to external devices.

In some exemplary embodiments, the control system is configured to determine a puff when an activation period exceeds a predetermined threshold. That is, the activation period (length of on time of the heater element) at which a puff is determined may be predetermined in the control system as a fixed length. However, in preferable embodiments, the threshold for the activation period above which a puff is determined is based on an average of the activation period of a plurality of previous thermostatic cycles. Here, the plurality of successive thermostatic cycles may be a fixed number of previous cycles (e.g. a rolling average). In the exemplary embodiments where the threshold is based on an average of previous thermostatic cycles, the threshold may be determined based on a percentage increase (i.e. a puff is determined when an activation period is 10% greater than the average), or a fixed offset (i.e. a puff is determined when an activation period is 100 milliseconds longer than the average). In exemplary embodiments where the threshold is determined by a percentage increase from the average of previous activation periods, the percentage increase may be more than 10% or more than 20% or more than 30% or more than 40%. In exemplary embodiments where the threshold is determined by a fixed offset from the average of previous activation periods, the fixed off set may be more than 100 milliseconds or more than 150 milliseconds or more than 200 milliseconds.

The aerosol generating device (i.e. device) may comprise an elongate body. An end of the elongate body may be configured for engagement with an aerosol-forming article. For example, the body may be configured for engagement with a heated tobacco (HT) consumable (or heat-not-burn (HNB) consumable). The terms "heated tobacco" and "heat-not-burn" are used interchangeably herein to describe a consumable that is of the type that is heated rather than combusted (or are used interchangeably to describe a device for use with such a consumable). The device may comprise a cavity that is configured for receipt of at least a portion of the consumable (i.e. for engagement with the consumable). The aerosol-forming article may be of the type that comprises an aerosol former (e.g. carried by an aerosol-forming substrate).

The device may comprise a heater for heating the aerosol-forming article. The heater may comprise a heating element, which may be in the form of a rod that extends from the body of the device. The heating element may extend from the end of the body that is configured for engagement with the aerosol-forming article.

The heater (and thus the heating element) may be rigidly mounted to the body. The heating element may be elongate so as to define a longitudinal axis and may, for example, have a transverse profile (i.e. transverse to a longitudinal axis of the heating element) that is substantially circular (i.e. the heating element may be generally cylindrical). Alternatively, the heating element may have a transverse profile that is rectangular (i.e. the heater may be a "blade heater"). The heating element may alternatively be in the shape of a tube (i.e. the heater may be a "tube heater"). The heating element may take other forms (e.g. the heating element may have an elliptical transverse profile). The shape and/or size (e.g. diameter) of the transverse profile of the heating element may be generally consistent for the entire length (or substantially the entire length) of the heating element.

The heating element may be between 15 mm and 25 mm long, e.g. between 18 mm and 20 mm long, e.g. around 19 mm long. The heating element may have a diameter of between 1.5 mm and 2.5 mm, e.g. a diameter between 2 mm and 2.3 mm, e.g. a diameter of around 2.15 mm.

The heating element may be formed of ceramic. The heating element may comprise a core (e.g. a ceramic core) comprising Al₂O₃. The core of the heating element may have a diameter of 1.8 mm to 2.1 mm, e.g. between 1.9 mm and 2 mm. The heating element may comprise an outer layer (e.g. an outer ceramic layer) comprising Al₂O₃. The thickness of the outer layer may be between 160 µm and 220 µm, e.g. between 170 µm and 190 µm, e.g. around 180 µm. The heating element may comprise a heating track, which may extend longitudinally along the heating element. The heating track may be sandwiched between the outer layer and the core of the heating element. The heating track may comprise tungsten and/or rhenium. The heating track may have a thickness of around 20 µm.

The heating element may be located in the cavity (of the device), and may extend (e.g. along a longitudinal axis) from an internal base of the cavity towards an opening of the cavity. The length of the heating element (i.e. along the longitudinal axis of the heater) may be less than the depth of the cavity. Hence, the heating element may extend for only a portion of the length of the cavity. That is, the heating element may not extend through (or beyond) the opening of the cavity.

The heating element may be configured for insertion into an aerosol-forming article (e.g. a HT consumable) when an aerosol-forming article is received in the cavity. In that respect, a distal end (i.e. distal from a base of the heating element where it is mounted to the device) of the heating element may comprise a tapered portion, which may facilitate insertion of the heating element into the aerosol-forming article. The heating element may fully penetrate an aerosol-forming article when the aerosol-forming article is received in the cavity. That is, the entire length, or substantially the entire length, of the heating element may be received in the aerosol-forming article.

The heating element may have a length that is less than, or substantially the same as, an axial length of an aerosol-forming substrate forming part of an aerosol-forming article (e.g. a HT consumable). Thus, when such an aerosol-forming article is engaged with the device, the heating element may only penetrate the aerosol-forming substrate, rather than other components of the aerosol-forming article. The heating element may penetrate the aerosol-forming substrate for substantially the entire axial length of the aerosol forming-substrate of the aerosol-forming article. Thus, heat may be transferred from (e.g. an outer circumferential surface of) the heating element to the surrounding aerosol-forming substrate, when penetrated by the heating element. That is, heat may be transferred radially outwardly (in the case of a cylindrical heating element) or e.g. radially inwardly (in the case of a tube heater).

Where the heater is a tube heater, the heating element of the tube heater may surround at least a portion of the cavity. When the portion of the aerosol-forming article is received in the cavity, the heating element may surround a portion of the aerosol-forming article (i.e. so as to heat that portion of the aerosol-forming article). In particular, the heating element may surround an aerosol forming substrate of the aerosol-forming article. That is, when an aerosol-forming article is engaged with the device, the aerosol forming substrate of the aerosol-forming article may be located adjacent an inner surface of the (tubular) heating element. When the heating element is activated, heat may be transferred radially inwardly from the inner surface of the heating element to heat the aerosol forming substrate.

The cavity may comprise a (e.g. circumferential) wall (or walls) and the (tubular) heating element may extend around at least a portion of the wall(s). In this way, the wall may be located between the inner surface of the heating element and an outer surface of the aerosol-forming article. The wall (or walls) of the cavity may be formed from a thermally conductive material (e.g. a metal) to allow heat conduction from the heating element to the aerosol-forming article. Thus, heat may be conducted from the heating element, through the cavity wall (or walls), to the aerosol-forming substrate of an aerosol-forming article received in the cavity.

In some embodiments the device may comprise a cap disposed at the end of the body that is configured for engagement with an aerosol-forming article. Where the device comprises a heater having a heating element, the cap may at least partially enclose the heating element. The cap may be moveable between an open position in which access is provided to the heating element, and a closed position in which the cap at least partially encloses the heating element. The cap may be slideably engaged with the body of the device, and may be slideable between the open and closed positions.

The cap may define at least a portion of the cavity of the device. That is, the cavity may be fully defined by the cap, or each of the cap and body may define a portion of the cavity. Where the cap fully defines the cavity, the cap may comprise an aperture for receipt of the heating element into the cavity (when the cap is in the closed position). The cap may comprise an opening to the cavity. The opening may be configured for receipt of at least a portion of an aerosol-forming article. That is, an aerosol-forming article may be inserted through the opening and into the cavity (so as to be engaged with the device).

The cap may be configured such that when an aerosol-forming article is engaged with the device (e.g. received in the cavity), only a portion of the aerosol-forming article is received in the cavity. That is, a portion of the aerosol-forming article (not received in the cavity) may protrude from (i.e. extend beyond) the opening. This (protruding) portion of the aerosol-forming article may be a terminal (e.g. mouth) end of the aerosol-forming article, which may be received in a user's mouth for the purpose of inhaling aerosol formed by the device.

The device may comprise a power source or may be connectable to a power source (e.g. a power source separate to the device). The power source may be electrically connectable to the heater. In that respect, altering (e.g. toggling) the electrical connection of the power source to the heater may affect a state of the heater. For example, toggling the electrical connection of the power source to the heater may toggle the heater between an on state and an off state. The power source may be a power store. For example, the power source may be a battery or rechargeable battery (e.g. a lithium ion battery).

The device may comprise an input connection (e.g. a USB port, Micro USB port, USB-C port, etc.). The input connection may be configured for connection to an external source of electrical power, such as a mains electrical supply outlet. The input connection may, in some cases, be used as a substitute for an internal power source (e.g. battery or rechargeable battery). That is, the input connection may be electrically connectable to the heater (for providing power to the heater). Hence, in some forms, the input connection may form at least part of the power source of the device.

Where the power source comprises a rechargeable power source (such as a rechargeable battery), the input connection may be used to charge and recharge the power source.

The device may comprise a user interface (Ul). In some embodiments the UI may include input means to receive operative commands from the user. The input means of the UI may allow the user to control at least one aspect of the operation of the device. In some embodiments the input means may comprise a power button to switch the device between an on state and an off state.

In some embodiments the UI may additionally or alternatively comprise output means to convey information to the user. In some embodiments the output means may comprise a light to indicate a condition of the device (and/or the aerosol-forming article) to the user. The condition of the device (and/or aerosol-forming article) indicated to the user may comprise a condition indicative of the operation of the heater. For example, the condition may comprise whether the heater is in an off state or an on state. In some embodiments, the UI unit may comprise at least one of a button, a display, a touchscreen, a switch, a light, and the like. For example, the output means may comprise one or more (e.g. two, three, four, etc.) light-emitting diodes ("LEDs") that may be located on the body of the device.

The device may further comprise a puff sensor (e.g. airflow sensor), which form part of the input means of the Ul. The puff sensor may be configured to detect a user drawing on an end (i.e. a terminal (mouth) end) of the aerosol-forming article. The puff sensor may, for example, be a pressure sensor or a microphone. The puff sensor may be configured to produce a signal indicative of a puff state. The signal may be indicative of the user drawing (an aerosol from the aerosol-forming article) such that it is e.g. in the form of a binary signal. Alternatively or additionally, the signal may be indicative of a characteristic of the draw (e.g. a flow rate of the draw, length of time of the draw, etc).

The device may comprise a controller, or may be connectable to a controller that may be configured to control at least one function of the device. The controller may comprise a microcontroller that may e.g. be mounted on a printed circuit board (PCB). The controller may also comprise a memory, e.g. non-volatile memory. The memory may include instructions, which, when implemented, may cause the controller to perform certain tasks or steps of a method. Where the device comprises an input connection, the controller may be connected to the input connection.

The controller may be configured to control the operation of the heater (and e.g. the heating element). Thus, the controller may be configured to control vaporisation of an aerosol forming part of an aerosol-forming article engaged with the device. The controller may be configured to control the voltage applied by power source to the heater. For example, the controller may be configured to toggle between applying a full output voltage (of the power source) to the heater and applying no voltage to the heater. Alternatively or additionally, the control unit may implement a more complex heater control protocol.

The device may further comprise a voltage regulator to regulate the output voltage supplied by the power source to form a regulated voltage. The regulated voltage may subsequently be applied to the heater.

In some embodiments, where the device comprises a Ul, the controller may be operatively connected to one or more components of the Ul. The controller may be configured to receive command signals from an input means of the UI. The controller may be configured to control the heater in response to the command signals. For example, the controller may be configured to receive "on" and "off' command signals from the UI and, in response, may control the heater so as to be in a corresponding on or off state.

The controller may be configured to send output signals to a component of the UI. The UI may be configured to convey information to a user, via an output means, in response to such output signals (received from the controller). For example, where the device comprises one or more LEDs, the LEDs may be operatively connected to the controller. Hence, the controller may configured to control the illumination of the LEDs (e.g. in response to an output signal). For example, the controller may be configured to control the illumination of the LEDs according to (e.g. an on or off) state of the heater.

Where the device comprises a sensor (e.g. a puff/airflow sensor), the controller may be operatively connected to the sensor. The controller may be configured to receive a signal from the sensor (e.g. indicative of a condition of the device and/or engaged aerosol-forming article). The controller may be configured to control the heater, or an aspect of the output means, based on the signal from the sensor.

The device may comprise a wireless interface configured to communicate wirelessly (e.g. via Bluetooth (e.g. a Bluetooth low-energy connection) or WiFi) with an external device. Similarly, the input connection may be configured for wired connection to an external device so as to provide communication between the device and the external device.

The external device may be a mobile device. For example, the external device may be a smart phone, tablet, smart watch, or smart car. An application (e.g. app) may be installed on the external device (e.g. mobile device). The application may facilitate communication between the device and the external device via the wired or wireless connection.

The wireless or wired interface may be configured to transfer signals between the external device and the controller of the device. In this respect, the controller may control an aspect of the device in response to a signal received from an external device. Alternatively or additionally, an external device may respond to a signal received from the device (e.g. from the controller of the device).

In an exemplary aspect, there is provided a smoking substitute system comprising a smoking substitute device according to the previous aspects, and an aerosol-forming article. The aerosol-forming article may comprise an aerosol-forming substrate at an upstream end of the aerosol-forming article. The article may be in the form of a smoking substitute article, e.g. heated tobacco (HT) consumable (also known as a heat-not-burn (HNB) consumable).

All the optional features of the closure described above in the context of the previous aspect apply equally to the further aspects. All the optional features of the detection element and/or the at least one deformable wall described above in the context of the previous aspect also apply equally to the further aspects.

As used herein, the terms "upstream" and "downstream" are intended to refer to the flow direction of the vapour/aerosol i.e. with the downstream end of the article/consumable being the mouth end or outlet where the aerosol exits the consumable for inhalation by the user. The upstream end of the article/consumable is the opposing end to the downstream end.

The aerosol-forming substrate is capable of being heated to release at least one volatile compound that can form an aerosol. The aerosol-forming substrate may be located at the upstream end of the article/consumable.

In order to generate an aerosol, the aerosol-forming substrate comprises at least one volatile compound that is intended to be vaporised/aerosolised and that may provide the user with a recreational and/or medicinal effect when inhaled. Suitable chemical and/or physiologically active volatile compounds include the group consisting of: nicotine, cocaine, caffeine, opiates and opoids, cathine and cathinone, kavalactones, mysticin, beta-carboline alkaloids, salvinorin A together with any combinations, functional equivalents to, and/or synthetic alternatives of the foregoing.

The aerosol-forming substrate may comprise plant material. The plant material may comprise least one plant material selected from the list including *Amaranthus dubius, Arctostaphylos uva-ursi* (Bearberry), *Argemone mexicana, Amica, Artemisia vulgaris,* Yellow Tees, *Galea zacatechichi, Canavalia maritima* (Baybean), *Cecropia mexicana* (Guamura), *Cestrum noctumum, Cynoglossum virginianum* (wild comfrey), *Cytisus scoparius, Damiana, Entada rheedii, Eschscholzia califomica* (California Poppy), *Fittonia albivenis, Hippobroma longiflora, Humulus japonica* (Japanese Hops), *Humulus lupulus* (Hops), *Lactuca virosa* (Lettuce Opium), *Laggera alata, Leonotis leonurus, Leonurus cardiaca* (Motherwort), *Leonurus sibiricus* (Honeyweed), *Lobelia cardinalis, Lobelia inflata* (Indian-tobacco), *Lobelia siphilitica, Nepeta cataria* (Catnip), *Nicotiana species* (Tobacco), *Nymphaea alba* (White Lily), *Nymphaea caerulea* (Blue Lily), Opium poppy, *Passiflora incamata* (Passionflower), *Pedicularis densiflora* (Indian Warrior), *Pedicularis groenlandica* (Elephant's Head), *Salvia divinorum, Salvia dorrii* (Tobacco Sage), Salvia species (Sage), *Scutellaria galericulata, Scutellaria lateriflora, Scutellaria nana, Scutellaria* species (Skullcap), *Sida acuta* (Wireweed), *Sida rhombifolia, Silene capensis, Syzygium aromaticum* (Clove), *Tagetes lucida* (Mexican Tarragon), *Tarchonanthus camphoratus, Tumera diffusa* (Damiana), *Verbascum* (Mullein), *Zamia latifolia*

(Maconha Brava) together with any combinations, functional equivalents to, and/or synthetic alternatives of the foregoing.

The plant material may be tobacco. Any type of tobacco may be used. This includes, but is not limited to, flue-cured tobacco, burley tobacco, Maryland Tobacco, dark-air cured tobacco, oriental tobacco, dark-fired tobacco, perique tobacco and rustica tobacco. This also includes blends of the above mentioned tobaccos.

The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon).

The aerosol-forming substrate may comprise a gathered sheet of homogenised (e.g. paper/slurry recon) tobacco or gathered shreds/strips formed from such a sheet.

The aerosol-forming substrate may comprise one or more additives selected from humectants, flavourants, fillers, aqueous/non-aqueous solvents and binders.

The flavourant may be provided in solid or liquid form. It may include menthol, liquorice, chocolate, fruit flavour (including e.g. citrus, cherry etc.), vanilla, spice (e.g. ginger, cinnamon) and tobacco flavour. The flavourant may be evenly dispersed throughout the aerosol-forming substrate or may be provided in isolated locations and/or varying concentrations throughout the aerosol-forming substrate.

The aerosol-forming substrate may be formed in a substantially cylindrical shape such that the article/consumable resembles a conventional cigarette. It may have a diameter of between 5 and 10 mm e.g. between 6 and 9 mm or 6 and 8 mm e.g. around 7 mm. It may have an axial length of between 10 and 15 mm e.g. between 11 and 14 mm such as around 12 or 13 mm.

The article/consumable may comprise at least one filter element. There may be a terminal filter element at the downstream/mouth end of the article/consumable.

The or at least one of the filter element(s) (e.g. the terminal filter element) may be comprised of cellulose acetate or polypropylene tow. The at least one filter element (e.g. the terminal filter element) may be comprised of activated charcoal. The at least one filter element (e.g. the terminal element) may be comprised of paper. The or each filter element may be at least partly (e.g. entirely) circumscribed with a plug wrap e.g. a paper plug wrap.

The terminal filter element (at the downstream end of the article/consumable) may be joined to the upstream elements forming the article/consumable by a circumscribing tipping layer e.g. a tipping paper layer. The tipping paper may have an axial length longer than the axial length of the terminal filter element such that the tipping paper completely circumscribes the terminal filter element plus the wrapping layer surrounding any adjacent upstream element.

In some embodiments, the article/consumable may comprise an aerosol-cooling element which is adapted to cool the aerosol generated from the aerosol-forming substrate (by heat exchange) before being inhaled by the user.

The article/consumable may comprise a spacer element that defines a space or cavity between the aerosol-forming substrate and the downstream end of the consumable. The spacer element may comprise a cardboard tube. The spacer element may be circumscribed by the (paper) wrapping layer.

As will be appreciated, the article and system of the exemplary embodiments and aspects can be used to generate an aerosol by operatively connecting a consumable and a device and inhaling to draw air through the consumable. When the inhale is completed whilst the heater is at its operating temperature, the heater generates an aerosol from the consumable (i.e. aerosol generating substrate), which is entrained within the airflow for inhalation by the user. It will be further appreciated that the method may comprise any number of further method steps as is known in the art, whether described herein or otherwise. Importantly, at its most general, the method comprises controlling an aerosol generating device to activate and deactivate a heater element to maintain a temperature of the heating element within an operating temperature. The method characterised by determining when an activation period of the heater element exceeds a threshold. As explained herein, determining a puff based on when an activation period exceeds a threshold can be a more reliable and accurate method of determining a puff than conventional methods using air flow sensors. Thus, in the exemplary embodiments, the method comprises determining that a puff has been initiated based on the determination that the activation period of the heater exceeds the threshold.

Suitably, the exemplary embodiments may comprise calculating an average of preceding activation periods, and determining the threshold based in the calculated average. The average of preceding activation periods may be a fixed number of activation periods (i.e. a rolling average).

The method may comprise counting the number of determinations that a puff has been initiated during a smoking session and extending the smoking session if a minimum count has not been reached during the smoking session. That is, the smoking session can be extended by entering a smoking session extension period if a user does not inhale a minimum number of inhales during the fixed length smoking session.

As will be appreciated, the exemplary methods may comprise a method of using or operating or controlling a device or system according to the exemplary embodiments and aspects as herein described.

Exemplary methods may be methods of operating a heat not burn device. For instance, the method suitably comprising the steps of determining a position of a closure for covering a cavity of the device into which an aerosol generating consumable (202) is received in use and controlling a heater of the device based on the determined position of the closure.

Suitably, the method may comprise determining, by a sensor associated with the controller, the position of the closure, wherein the controller deactivates the heater based on a signal received from the sensor when the closure is in a first position where the closure covers a cavity in the device.

The exemplary embodiments and aspects includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### SUMMARY OF THE FIGURES

So that the exemplary embodiments may be understood, and so that further aspects and features thereof may be appreciated, embodiments illustrating the principles of the disclosure will now be discussed in further detail with reference to the accompanying figures, in which:
Figure 1A is a schematic of a smoking substitute system;
Figure 1B is a schematic of a variation of the smoking substitute system of Figure 1A;
Figure 2A is a front view of a first embodiment of a smoking substitute system with the consumable engaged with the device;
Figure 2B is a front view of the first embodiment of the smoking substitute system with the consumable disengaged from the device;
Figure 2C is a section view of the consumable of the first embodiment of the smoking substitute system;
Figure 2D is a detailed view of an end of the device of the first embodiment of the smoking substitute system;
Figure 2E is a section view of the first embodiment of the substitute smoking system; and
Figure 3 is a representative graph showing the thermostatic heater control where the temperature of the heating element is pictorialised against the heater activation and deactivation periods during a smoking session.

### DETAILED DESCRIPTION OF THE INVENTION

Aspects and embodiments of the present disclosure will now be discussed with reference to the accompanying figures. Further aspects and embodiments will be apparent to those skilled in the art. All documents mentioned in this text are incorporated herein by reference.

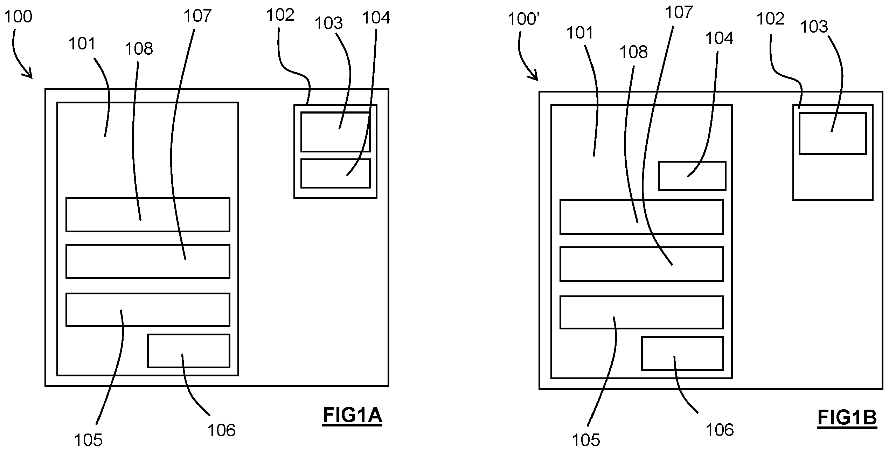

Figure 1A is a schematic providing a general overview of a smoking substitute system 100. The system 100 includes a substitute smoking device 101 and an aerosol-forming article in the form of a consumable 102, which comprises an aerosol former 103. The system is configured to vaporise the aerosol former by heating the aerosol former 103 (so as to form a vapour/aerosol for inhalation by a user).

In the illustrated system, the heater 104 forms part of the consumable 102 and is configured to heat the aerosol former 103. In this variation, the heater 104 is electrically connectable to the power source 105, for example, when the consumable 102 is engaged with the device 101. Heat from the heater 104 vaporises the aerosol former 103 to produce a vapour. The vapour subsequently condenses to form an aerosol, which is ultimately inhaled by the user.

The system 100 further comprises a power source 105 that forms part of the device 101. In other embodiments the power source 105 may be external to (but connectable to) the device 101. The power source 105 is electrically connectable to the heater 104 such that it is able to supply power to the heater 104 (i.e. for the purpose of heating the aerosol former 103). Thus, control of the electrical connection of the power source 105 to the heater 104 provides control of the state of the heater 104. The power source 105 may be a power store, for example a battery or rechargeable battery (e.g. a lithium ion battery).

The system 100 further comprises an I/O module comprising a connector 106 (e.g. in the form of a USB port, Micro USB port, USB-C port, etc.). The connector 106 is configured for connection to an external source of electrical power, e.g. a mains electrical supply outlet. The connector 106 may be used in substitution for the power source 105. That is the connector 106 may be electrically connectable to the heater 104 so as to supply electricity to the heater 104. In such embodiments, the device may not include a power source, and the power source of the system may instead comprise the connector 106 and an external source of electrical power (to which the connector 106 provides electrical connection).

In some embodiments, the connector 106 may be used to charge and recharge the power source 105 where the power source 105 includes a rechargeable battery.

The system 100 also comprises a user interface (Ul) 107. Although not shown, the UI 107 may include input means to receive commands from a user. The input means of the UI 107 allows the user to control at least one aspect of the operation of the system 100. The input means may, for example, be in the form of a button, touchscreen, switch, microphone, etc.

The UI 107 also comprises output means to convey information to the user. The output means may, for example, comprise lights (e.g. LEDs), a display screen, speaker, vibration generator, etc.

The system 100 further comprises a controller 108 that is configured to control at least one function of the device 101. In the illustrated embodiment, the controller 108 is a component of the device 101, but in other embodiments may be separate from (but connectable to) the device 101. The controller 108 is configured to control the operation of the heater 104 and, for example, may be configured to control the voltage applied from the power source 105 to the heater 104. The controller 108 may be configured to toggle the supply of power to the heater 104 between an on state, in which the full output voltage of the power source 105 is applied to the heater 104, and an off state, in which the no voltage is applied to the heater 104.

Although not shown, the system 100 may also comprise a voltage regulator to regulate the output voltage from the power source 105 to form a regulated voltage. The regulated voltage may then be applied to the heater 104.

In addition to being connected to the heater 104, the controller 108 is operatively connected to the UI 107. Thus, the controller 108 may receive an input signal from the input means of the UI 107. Similarly, the controller 108 may transmit output signals to the UI 107. In response, the output means of the UI 107 may convey information, based on the output signals, to a user. The controller also comprises a memory 109, which is a non-volatile memory. The memory 109 includes instructions, which, when implemented, cause the controller to perform certain tasks or steps of a method.

Figure 1B is a schematic showing a variation of the system 100 of Figure 1A. In the system 100' of Figure 1B, the heater 104 forms part of the consumable 102, rather than the device 101. In this variation, the heater 104 is electrically connectable to the power source 105, for example, when the consumable 102 is engaged with the device 101.

The systems 100, 100' of Figures 1A and 1B may be implemented as one of two broad categories of system, each in accordance with the present exemplary embodiments: a heated tobacco (HT) system or an e-cigarette system. A description of each category of system follows.

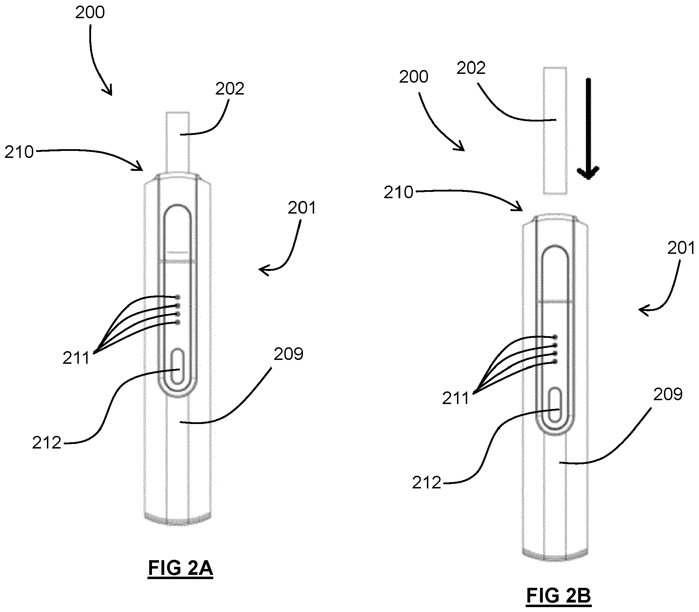

Figures 2A and 2B illustrate a heated-tobacco (HT) smoking substitute system 200. The system 200 is an example of the systems 100, 100' described in relation to Figures 1A or 1B. System 200 includes a heat- not burn (HNB) device 201 and an HT consumable 202. The description of Figures 1A and 1B above is applicable to the system 200 of Figures 2A and 2B, and will thus not be repeated.

The device 201 and the consumable 202 are configured such that the consumable 202 can be engaged with the device 201. Figure 2A shows the device 201 and the consumable 202 in an engaged state, whilst Figure 2B shows the device 201 and the consumable 202 in a disengaged state.

The device 201 comprises a body 209 and cap 210. In use the cap 210 is engaged at an end of the body 209. Although not apparent from the figures, the cap 210 is moveable relative to the body 209. In particular, the cap 210 is slideable and can slide along a longitudinal axis of the body 209.

The device 201 comprises an output means (forming part of the UI of the device 201) in the form of a plurality of light-emitting diodes (LEDs) 211 arranged linearly along the longitudinal axis of the device 201 and on an outer surface of the body 209 of the device 201. A button 212 is also arranged on an outer surface of the body 209 of the device 201 and is axially spaced (i.e. along the longitudinal axis) from the plurality of LEDs 211.

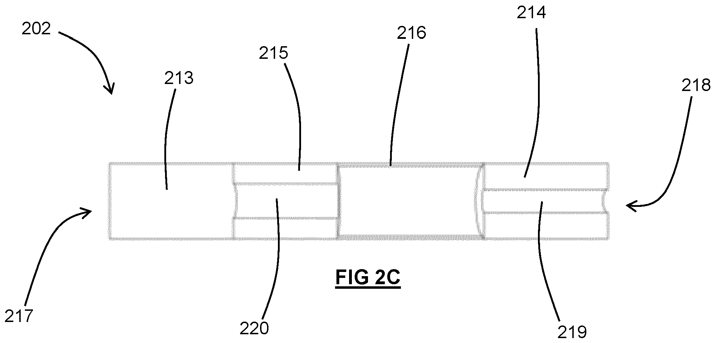

Figure 2C shows a detailed section view of the consumable of 202 of the system 200. The consumable 202 generally resembles a cigarette. In that respect, the consumable 202 has a generally cylindrical form with a diameter of 7 mm and an axial length of 70 mm. The consumable 202 comprises an aerosol forming substrate 213, a terminal filter element 214, an upstream filter element 215 and a spacer element 216. In other embodiments, the consumable may further comprise a cooling element. A cooling element may exchange heat with vapour that is formed by the aerosol-forming substrate 213 in order to cool the vapour so as to facilitate condensation of the vapour.

The aerosol-forming substrate 213 is substantially cylindrical and is located at an upstream end 217 of the consumable 202, and comprises the aerosol former of the system 200. In that respect, the aerosol forming substrate 213 is configured to be heated by the device 201 to release a vapour. The released vapour is subsequently entrained in an airflow flowing through the aerosol-forming substrate 213. The airflow is produced by the action of the user drawing on a downstream 218 (i.e. terminal or mouth end) of the consumable 202.

In the present embodiment, the aerosol forming substrate 213 comprises tobacco material that may, for example, include any suitable parts of the tobacco plant (e.g. leaves, stems, roots, bark, seeds and flowers). The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon). For example, the aerosol-forming substrate 213 may comprise a gathered sheet of homogenised (e.g. paper/slurry recon) tobacco or gathered shreds/strips formed from such a sheet.

In order to generate an aerosol, the aerosol forming substrate 213 comprises at least one volatile compound that is intended to be vaporised/aerosolised and that may provide the user with a recreational and/or medicinal effect when inhaled. The aerosol-forming substrate 213 may further comprise one or more additives. For example, such additives may be in the form of humectants (e.g. propylene glycol and/or vegetable glycerine), flavourants, fillers, aqueous/non-aqueous solvents and/or binders.

The terminal filter element 214 is also substantially cylindrical, and is located downstream of the aerosol forming substrate 213 at the downstream end 218 of the consumable 202. The terminal filter element 214 is in the form of a hollow bore filter element having a bore 219 (e.g. for airflow) formed therethrough. The diameter of the bore 219 is 2 mm. The terminal filter element 214 is formed of a porous (e.g. monoacetate) filter material. As set forth above, the downstream end 218 of the consumable 202 (i.e. where the terminal filter 214 is located) forms a mouthpiece portion of the consumable 202 upon which the user draws. Airflow is drawn from the upstream end 217, thorough the components of the consumable 202, and out of the downstream end 218. The airflow is driven by the user drawing on the downstream end 218 (i.e. the mouthpiece portion) of the consumable 202.

The upstream filter element 215 is located axially adjacent to the aerosol-forming substrate 213, between the aerosol-forming substrate 213 and the terminal filter element 214. Like the terminal filter 214, the upstream filter element 215 is in the form of a hollow bore filter element, such that it has a bore 220 extending axially therethrough. In this way, the upstream filter 215 may act as an airflow restrictor. The upstream filter element 215 is formed of a porous (e.g. monoacetate) filter material. The bore 220 of the upstream filter element 215 has a larger diameter (3 mm) than the terminal filter element 214.

The spacer 216 is in the form of a cardboard tube, which defines a cavity or chamber between the upstream filter element 215 and the terminal filter element 214. The spacer 216 acts to allow both cooling and mixing of the vapour/aerosol from the aerosol-forming substrate 213. The spacer has an external diameter of 7 mm and an axial length of 14 mm.

Although not apparent from the figure, the aerosol-forming substrate 213, upstream filter 215 and spacer 216 are circumscribed by a paper wrapping layer. The terminal filter 214 is circumscribed by a tipping layer that also circumscribes a portion of the paper wrapping layer (so as to connect the terminal filter 214 to the remaining components of the consumable 202). The upstream filter 215 and terminal filter 214 are circumscribed by further wrapping layers in the form of plug wraps.

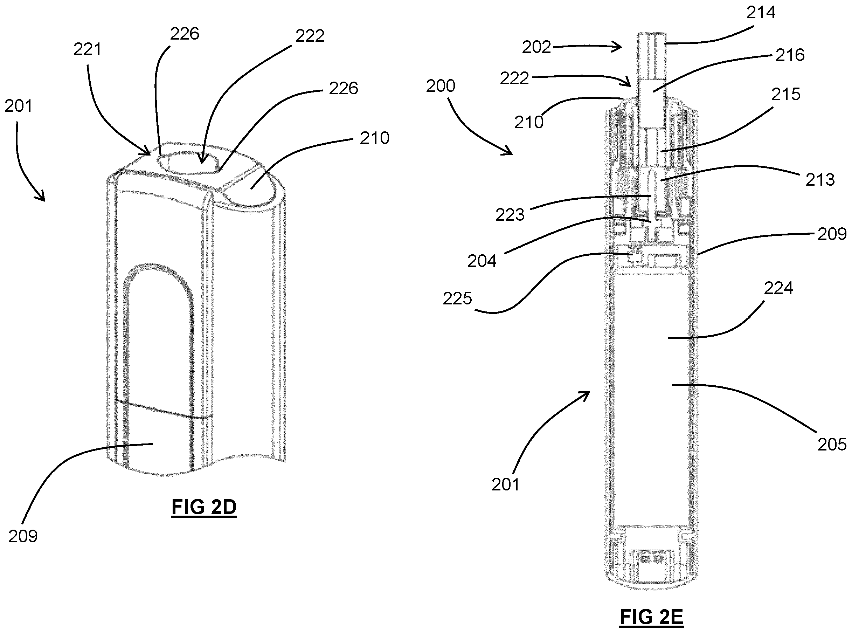

Returning now to the device 201, Figure 2D illustrates a detailed view of the end of the device 201 that is configured to engage with the consumable 202. The cap 210 of the device 201 includes an opening 221 to an internal cavity 222 (more apparent from Figure 2D) defined by the cap 210. The opening 221 and the cavity 222 are formed so as to receive at least a portion of the consumable 202. During engagement of the consumable 202 with the device 201, a portion of the consumable 202 is received through the opening 221 and into the cavity 222. After engagement (see Figure 2B), the downstream end 218 of the consumable 202 protrudes from the opening 221 and thus also protrudes from the device 201. The opening 221 includes laterally disposed notches 226. When a consumable 202 is received in the opening 221, these notches 226 remain open and could, for example, be used for retaining a cover in order to cover the end of the device 201.

Figure 2E shows a cross section through a central longitudinal plane through the device 201. The device 201 is shown with the consumable 202 engaged therewith.

The device 201 comprises a heater 204 comprising heating element 223. The heater 204 forms part of the body 209 of the device 201 and is rigidly mounted to the body 209. In the illustrated embodiment, the heater 204 is a rod heater with a heating element 223 having a circular transverse profile. In other embodiments the heater may be in the form of a blade heater (e.g. heating element with a rectangular transverse profile) or a tube heater (e.g. heating element with a tubular form).

The heating element 223 of the heater 204 projects from an internal base of the cavity 222 along a longitudinal axis towards the opening 221. As is apparent from the figure, the length (i.e. along the longitudinal axis) of the heating element is less than a depth of the cavity 222. In this way, the heating element 223 does not protrude from or extend beyond the opening 221.

When the consumable 202 is received in the cavity 222 (as is shown in Figure 2E), the heating element 223 penetrates the aerosol-forming substrate 213 of the consumable 202. In particular, the heating element 223 extends for nearly the entire axial length of the aerosol-forming substrate 213 when inserted therein. Thus, when the heater 204 is activated, heat is transferred radially from an outer circumferential surface the heating element 223 to the aerosol-forming substrate 213.

The device 201 further comprises an electronics cavity 224. A power source, in the form of a rechargeable battery 205 (a lithium ion battery), is located in electronics cavity 224.

The device 201 includes a connector (i.e. forming part of an IO module of the device 201) in the form of a USB port 206. The connector may alternatively be, for example, a micro-USB port or a USB-C port for examples. The USB port 206 may be used to recharge the rechargeable battery 205.

The device 201 includes a controller (not shown) located in the electronics cavity 224. The controller comprises a microcontroller mounted on a printed circuit board (PCB). The USB port 206 is also connected to the controller 208 (i.e. connected to the PCB and microcontroller).

The controller 208 is configured to control at least one function of the device 201. For example, the controller 208 is configured to control the operation of the heater 204. Such control of the operation of the heater 204 may be accomplished by the controller toggling the electrical connection of the rechargeable battery 205 to the heater 204. For example, the controller 208 is configured to control the heater 204 in response to a user depressing the button 212. Depressing the button 212 may cause the controller to allow a voltage (from the rechargeable battery 205) to be applied to the heater 204 (so as to cause the heating element 223 to be heated).

The controller is also configured to control the LEDs 211 in response to (e.g. a detected) a condition of the device 201 or the consumable 202. For example, the controller may control the LEDs to indicate whether the device 201 is in an on state or an off state (e.g. one or more of the LEDs may be illuminated by the controller when the device is in an on state).

The device 201 comprises a further input means (i.e. in addition to the button 212) in the form of a puff sensor 225. The puff sensor 225 is configured to detect a user drawing (i.e. inhaling) at the downstream end 218 of the consumable 202. The puff sensor 225 may, for example, be in the form of a pressure sensor, flowmeter or a microphone. The puff sensor 225 is operatively connected to the controller 208 in the electronics cavity 224, such that a signal from the puff sensor 225, indicative of a puff state (i.e. drawing or not drawing), forms an input to the controller 208 (and can thus be responded to by the controller 208).

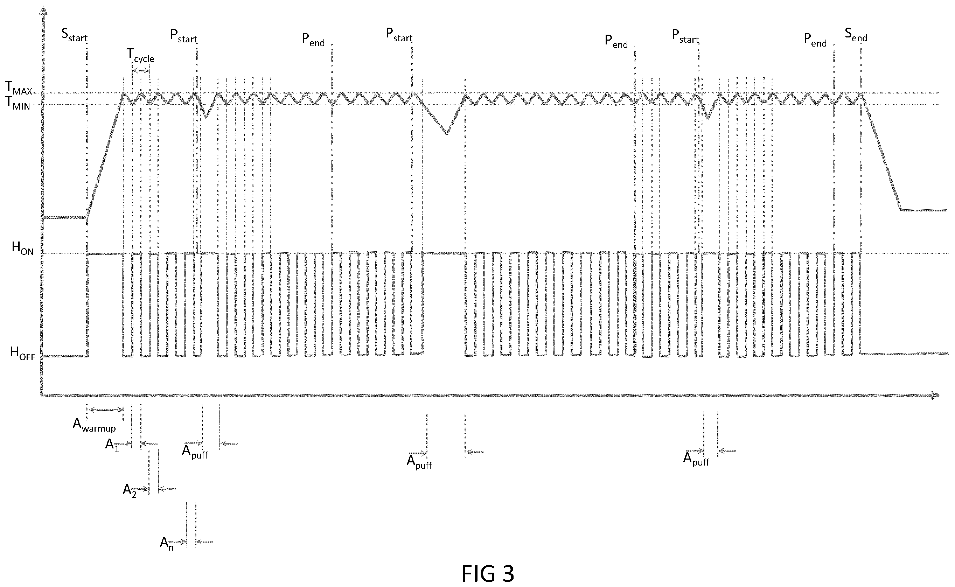

As will be appreciated, the heating element 223 (also heater element) of the device 201 (also aerosol generating device) is controlled by the controller 208 (also control system) to be activated to heat the consumable. In the exemplary embodiments, the control system comprises a thermostatic heater control. Thermostatic heater controls are known in the art and operate by modulating the power supplied to the heater element between on and off. Consequently, as shown in Figure 3, when the device is manipulated to start a smoking session (Sstart) the thermostatic heater control activates the heater (i.e. provides power to the heater at an 'on level'). The heater element enters a warm-up period where the heater element is brought up to a temperature suitable for generating the aerosol from the consumable. During the warm-up period the heater element is activated until the heater temperature exceeds an upper limit (Tmax) of an operating temperature band. Suitably, the device is provided with a temperature sensor (not shown) for monitoring the temperature of the heater element. For instance, the temperature sensor may be directly attached to an outer surface of the heater element. The output of the temperature sensor is suitably used by the thermostatic heater control to determine when the upper limit Tmax is exceeded.

When the thermostatic heater controller determines the upper temperature limit is exceeded, the warm-up period ends and the heater element is deactivated. That is, the thermostatic heater control determines that the heating element has reached the upper temperature limit and turns off the power to the heater element. The device is suitably configured to provide an alert to the user to inform them that the warm-up period is finished (i.e. that the heater is up to temperature and puffing can begin). The alert may be a visual alert or a haptic feedback alert or another alert as is suitable. The activation period of the heater element during the warm-up period is shown as period Awarmup in Figure 3. That is, the activation period of the heater element during the warm-up is the period (i.e. length of time) the heater element is activated for to bring the heater element up to an operating temperature.

As is known, the thermostatic heater control is configured to maintain the heater element temperature within the operating temperature band during a length of the smoking session. Consequently, as shown in Figure 3, when the heater is turned off (enters a deactivation period) the heater element cools. When the temperature sensor senses that the heater element cools to a temperature below a lower limit (Tmin) of the operating temperature band, the thermostatic heater control activates the heater element (e.g. provides power). With the heater element being powered, the heater element heats up and the control process is repeated.

The time during which the heater element is on is termed an activation period and the time period during which the heater is off is termed a deactivation period. A successive activation period and deactivation period is termed a thermostatic cycle (Tcycle). The thermostatic heater control will typically complete multiple thermostatic cycles during the smoking session. In figure 3, activation periods A1 to An are shown after the warm-up. When a puff is not occurring, the activation periods of successive thermostatic cycles are relatively stable as the heater element tends to cool at a consistent rate from the upper limit and during a deactivation period. A typical activation period may be around 300 milliseconds.

In Figure 3, a puff is shown as being initiated at Pstart. The puff consists of a user inhaling on the consumable to draw air through the consumable, wherein the aerosol becomes entrained in the airflow and inhaled by the user. The puff action causing the air to be drawn through the consumable tends to act as a forced coolant to the heater element. Consequently, it has been found that the activation period (Apuff) of the heater element after the initiation of the puff is detectably larger than activation periods of the preceding thermostatic cycles. That is, by monitoring the activation period (i.e. heater on time) it is possible to detect a puff by determining that an activation period is above a threshold as herein described.

After the initiation of the puff, the heater element continues to cycle through thermostatic cycles to maintain the heater element between the lower and upper limits of the operating temperature band. With a steady puff (i.e. flow rate), the activation periods may fall below the threshold for determining a puff and therefore a puff can be determined each time an activation period is longer than the threshold for determining a puff. Alternatively, or additionally, the control system can be configured to disregard activation periods within a period from the detected puff.

During a smoking session the user is free to inhale on the device at their preference. As shown in figure 3, the identifiable increase in the activation period is present after the initiation of each puff (Pstart) and as explained above. Thus, the number of puffs during a session can be counted by configuring the control system to count each time an activation period is determined to be above the threshold. The control system can be configured to use the puff detection or the puff count in operating functions of the device.

The control system is configured to stop the smoking session after a predetermined time has elapsed from the start. The end of the session can be alerted to the user similarly to the start. Once the session has ended the thermostatic heater control turns off power to the heater element and the heater element cools down ready for the start of a subsequent session.

It is known to use a puff count to extend a smoking session if a minimum number of puffs has not been exceeded during the predetermined time has elapsed. Thus, having a repeatable and reliable determination of a puff is advantageous.

The thermostatic cycles depicted in Figure 3 are representative and do not take into account hysteresis effects of the temperature following on/off states of the heater element.

The threshold above which an activation period is determined to represent the initiation of a puff can be pre-set in the control system. For instance, in the absence of a puff, the heater element might be controlled to maintain the temperature with activation periods of around 300milliseconds, and the control system may be configured to recognise a heater activation period above 500milliseconds as an indication that a puff has been initiated and therefore determine a puff when an activation period exceeds the fixed threshold. In alternative embodiments, the control system can determine a puff has been initiated based on an average activation period. For instance, the activation periods A1-An can be averaged and the control system monitors activation periods and determines a puff when the measured activation period is greater than the average. In some embodiments, it is envisaged the control system can determine a puff has occurred when the activation period is greater than the average by a predetermined off set. For instance, if the average heater activation period is 310milliseconds, the control system can be configured to calculate the threshold as the average plus a fixed off set. That is, if the fixed off set was 200milliseconds, the threshold for determining a puff would be an activation period of higher than 510 milliseconds occurs. Whereas if the average was 290 milliseconds, in the same example, a puff would be determined when an activation period exceeded 490 milliseconds. Alternatively, the control system can be configured to set the threshold as a percentage increase above the average. For instance, if the percentage was set to be greaterthan 40%, with an average of 300 milliseconds, a puff would be determined when a heater activation period exceeds 420 milliseconds, whereas if the average was 320millisceonds, a puff would be determined when a heater activation period exceeds 448 milliseconds.

In the exemplary embodiments where the threshold for determining a puff is based on an average activation period of previous thermostatic cycles, the average may be a rolling average based on a fixed number of cycles preceding the activation period being determined.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. An aerosol generating device comprising a heater element, a temperature sensor, and a control system including a thermostatic heater control; wherein the thermostatic heater control is configured to activate and deactivate the heater element based on an output of the temperature sensor and to maintain a temperature of the heater element within an operating temperature;
**characterised in that**
the control system is configured to determine a puff has been initiated based on determining when an activation period exceeds a threshold.

2. The aerosol generating device of claim 1, wherein the threshold is a fixed threshold.

3. The aerosol generating device of claim 1, wherein the threshold is based on an average of preceding activation periods.

4. The aerosol generating device of claim 3, wherein the average of preceding activation periods is an average of a fixed number of preceding activation periods.

5. The aerosol generating device of claim 3 or claim 4, wherein the threshold is determined as a fixed offset from the average of preceding activation periods.

6. The aerosol generating device of claim 3 or claim 4, wherein the threshold is determined as a percentage increase of the average of preceding activation periods.

7. The aerosol generating device of any of claims 1 to 6, wherein the control system uses the determination that a puff has been initiated to control a further function of the device.

8. The aerosol generating device of any of claims 1 to 7, wherein the control system comprises a count function to count the number of determinations that a puff has been initiated.

9. The aerosol generating device of claim 8, wherein the count function is reset at the end of a smoking session.

10. The aerosol generating device of claim 9, wherein if a minimum count has not been reached during the smoking session, the control system is configured to extend the smoking session.

11. The aerosol generating device of any of claims 1 to 10, wherein the device comprises an elongate body and an end of the elongate body is configured for engagement with an aerosol-forming article, the heater element being configured for insertion into the aerosol-forming article.

12. A system comprising the aerosol generating device of any of claims 1 to 11 and an aerosol-forming article.

13. A method of controlling an aerosol generating device, the method comprising-:
activating and deactivating a heater element to maintain a temperature of the heater element within an operating temperature;
determining when an activation period of the heater element exceeds a threshold; and
determining that a puff has been initiated based on the determination that the activation period of the heater element exceeds the threshold.

14. The method of claim 13, comprising calculating an average of preceding activation periods, and determining the threshold based on the calculated average.

15. The method of claim 13 or claim 14, wherein the method comprises counting the number of determinations that a puff has been initiated during a smoking session and extending the smoking session if a minimum count has not been reached during the smoking session.
